# EUROPEAN PATENT APPLICATION

(11) **EP 4 803 399 A1**
(43) Date of publication of application: **09.09.2026**
(21) Application number: 25165509.8
(22) Date of filing: 24.03.2025
(51) Int. Cl.: B61G 11/16, B60R 19/02

(54) **SHOCK ABSORBING DEVICE FOR A VEHICLE**

(30) Priority: 03.03.2025 PL 45136525
(71) Applicant: AXTONE Spólka Akcyjna, 37-220 Kanczuga (PL)
(72) Inventor: SUM, Miroslaw, 37-200 Przeworsk (PL); WISZ, Krzysztof, 36-073 Strazow (PL)
(74) Representative: Patpol Kancelaria Patentowa Sp. z o.o.

(57) **Abstract**

The subject of the invention is an impact energy absorbing device for a vehicle, comprising at least two energy absorbing elements (1) for attachment to the vehicle frame, and a movable crash beam (2) attached to them and having at least two connecting elements (2a). The device is characterized by the fact that the crash beam (2) is attached to the energy absorbing elements (1) with pins (3) connecting the energy absorbing elements (1) and the corresponding coupling elements (2a) of the beam, and is pivotable between an essentially horizontal working position and an essentially vertical coupling position.

## Description

The subject of the invention is an impact energy absorbing device for a vehicle, comprising at least two energy absorbing elements for attachment to a vehicle frame, and a movable crash beam attached to them and having at least two connecting elements. In particular, the device according to the invention is intended for a rail vehicle. The energy absorbing device serves generally to compensate for possible collision displacements, dampen the corresponding collision forces, and reduce kinetic energy to prevent them from being transferred to the vehicle.

Bumpers and buffering devices are known from the state of the art. They are used to receive, to some extent, to reduce, and to compensate for collision forces resulting from the relative movements of vehicles and their contact.

Document DE 10 2009 034 682 A1 refers to an energy absorption device for the front side of rail vehicles, with reduced matching effort between components from different vehicle manufacturers. This is achieved through a modular design. There is a need for a flexible system for coupling vehicles and for compensating forces between those vehicles. For example, vehicles with coupling devices are known, whereby the coupling device is not used when another vehicle is not to be coupled at the appropriate end of the vehicle. This type of known solutions are very complex and/or require increased space.

Patent EP 3 524 489 presents an absorption device for a vehicle, in particular for absorbing kinetic energy in the event of a vehicle collision, comprising at least two energy absorbing elements for attachment to the vehicle frame, and a crash beam with two ends, for directly receiving the forces of a collision, with the crash beam mounted, via the endings and a holding device, to the energy absorbing elements. The restraining device allows a linear movement of the crash beam in at least partially vertical direction in order to allow access to the vehicle coupling. The beam is translationally moved out of the way, e.g. raised (coupling position) when carrying out coupling of two vehicles (e.g. wagons) with each other or uncoupling them, and placed in the normal position, e.g. lowered (working position) when the vehicle is in use (regardless it has been coupled to the other vehicle or not). Thus, the crash beam performs its function of receiving collision forces while the vehicle is in use, but facilitates the coupling of vehicles together, or their uncoupling, by its translation movement. At the same time, this device, due to the way it works, causes the crash beam in the coupling position to generally not protrude beyond the vehicle, or to protrude very slightly, up to 10 cm or a maximum of 1% of the vehicle length.

In some applications, the device according to EP 3 524 489 is insufficient to facilitate the coupling of vehicles (for example, when the coupling is short or difficult to be accessed). Hence, it was necessary to create a solution that would give more space to manipulate the vehicle's coupling. The present invention solves this problem.

In addition, in the solution according to EP 3 524 489, the crash beam is moved essentially vertically, which requires a complex lifting mechanism and a lot of energy to perform such movement (the beam can weigh more than 100 kg). The present invention also solves this problem by using pivotal motion, which is simpler and requires less energy.

The present invention relates to an impact-energy absorbing device for a vehicle comprising at least two energy absorbing elements for attachment to the vehicle frame, and a movable crash beam attached to them and having at least two coupling elements, and is characterized by the crash beam being attached to the energy absorbing elements by means of pins connecting the energy absorbing elements and the respective coupling elements of the beam, and is pivotable between a substantially horizontal operating position and a substantially vertical coupling position.

Preferably, the device is equipped with a gear mechanism.

Preferably, the device is equipped with means for attaching a drive.

More preferably, the means to attach the drive is a worm gear.

Preferably, the coupling components of the crash beam have slotted openings in which the ends are located of the pins connecting the energy absorbing components and the respective coupling components of the beam; the longitudinal axis of the slotted openings is essentially vertical in the working position of the crash beam and is essentially horizontal in the coupling position of the crash beam, and the pins are slidable in the openings so that in the working position the crash beam rests and hangs on the pins, while in the coupling position it is slidable essentially horizontally toward the vehicle frame and back.

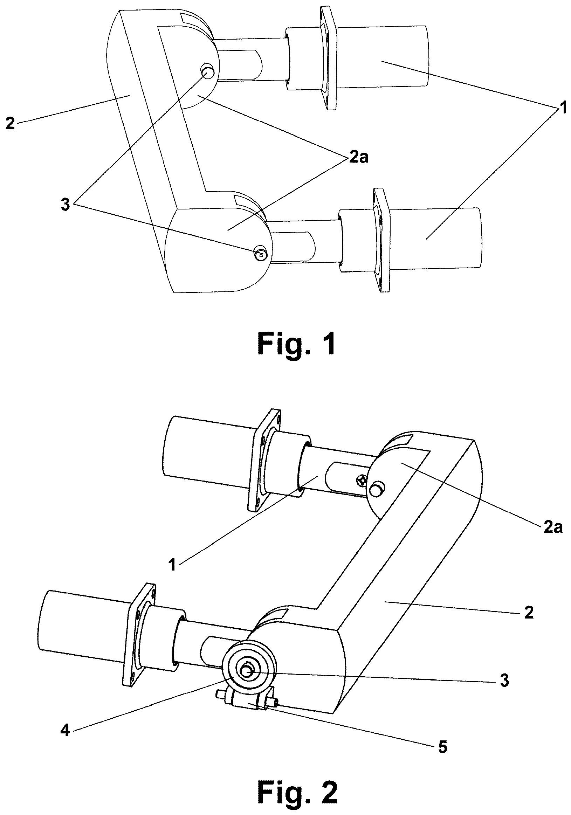

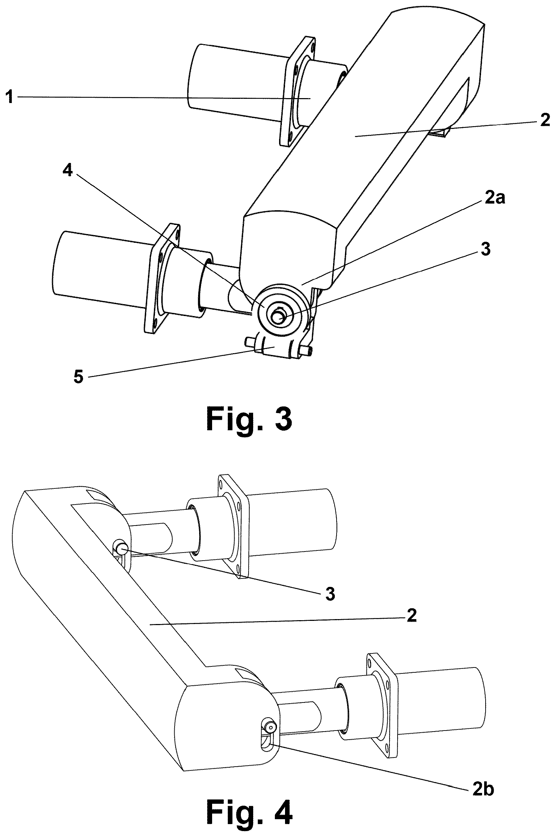

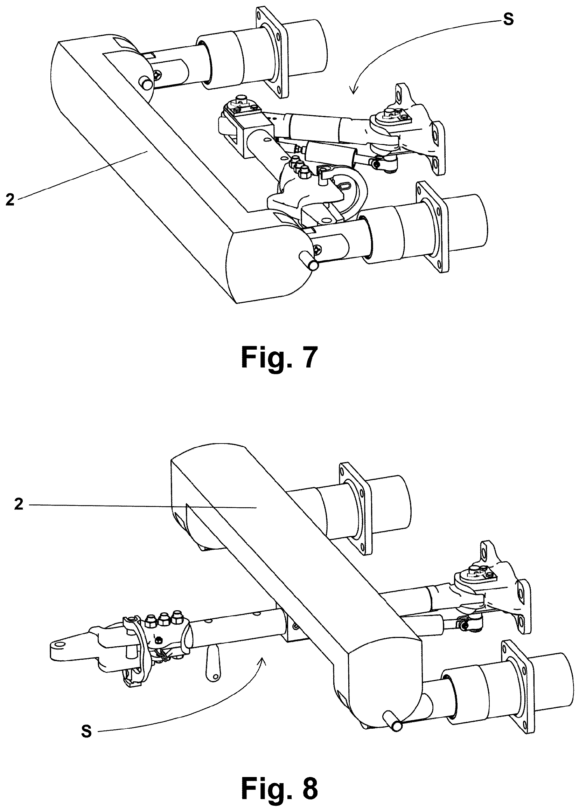

The present invention is shown in embodiments on drawings, where schematically fig. 1 shows an embodiment of the device according to the invention, in the working position, figs. 2 and 3 show an embodiment equipped with a gear mechanism and means for attaching the drive, respectively in the working position and coupling position, figs. 4-6 show an embodiment with slots for additional sliding movement of the crash beam in the coupling position, respectively, in the working position, in the coupling position without retraction and in the coupling position with retraction, figs. 7 and 8 show the embodiment from fig. 1 in the working position and in the coupling position, respectively, and the position of the beam in both positions in relation to the vehicle coupling.

In the embodiment shown in Figs. 1, 7 and 8, it is visible that the device according to the invention includes two energy absorbing elements 1 for attachment to the vehicle frame (not shown), as well as a movable crash beam 2 attached to them. The crash beam 2 has two connecting elements 2a located at its ends. Crash beam 2 is attached to the energy absorbing elements 1 with pins 3 connecting the energy absorbing elements 1 and the corresponding coupling elements 2a of the beam, and is pivotable between an essentially horizontal working position (fig. 1 and 7) and an essentially vertical coupling position (fig. 8). Fig. 7 and fig. 8 show the principle of operation of the device - the crash beam 2 is pivoted upward on the pins 3 (it can also, in some applications, be pivoted downward), so that the coupling S of the vehicle is exposed and the coupling of two vehicles (e.g. wagons) is facilitated. The advantage of this solution, over the one featured in EP 3 524 489, is that the crash beam 2, by pivoting (instead of sliding it), is at the same time retracted towards the vehicle, differently than in EP 3 524 489, which gives additional space for manipulation at the coupling S and makes coupling even easier.

A person skilled in the art will note that the crash beam 2 may be equipped with more energy absorbing elements 1 and connecting elements 2a, for example for wide vehicles or beams made of heavier materials that will require additional support. Coupling elements 2a, therefore, do not necessarily have to be located at the ends of the crash beam 2. For example, a third coupling element 2a can be included in the middle, which will be connected to the corresponding energy absorbing element 1. There can even be more such connections of elements 1, 2a, as needed.

The crash beam can be pivoted manually or by means of an attached drive.

In the embodiment shown in fig. 2 and 3, the device is equipped with a gear mechanism 4 that facilitates pivoting of the crash beam 2 for both manual and driven pivoting. This example also shows that the device is equipped with means 5 to attach a drive, specifically a worm gear. Of course, other means of supporting and connecting the drive than those shown in the embodiment may also be used. Gear 4 may be used in both manual and driven versions, and the driven version may be equipped or not equipped with gear 4.

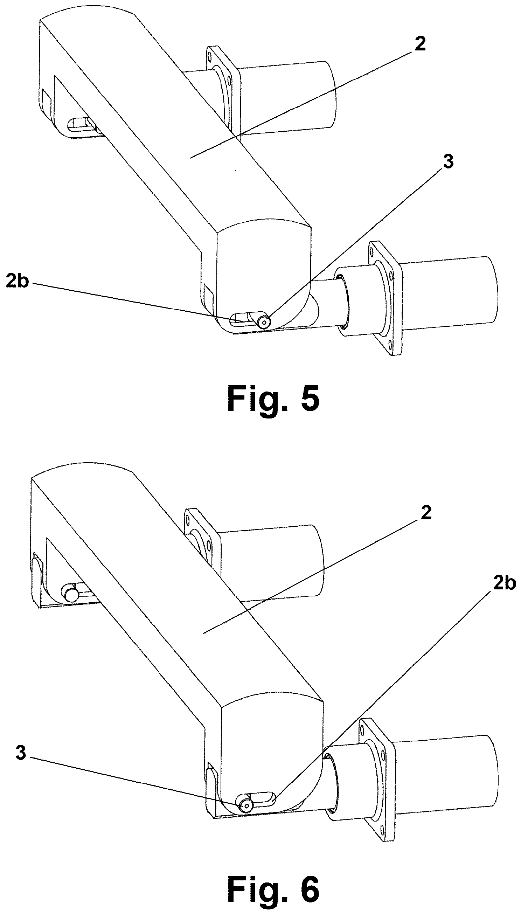

In a further embodiment, figs. 4-6 shows that the connecting elements 2a of the crash beam 2 have slotted openings 2b in which the ends are located of the pins 3 connecting the energy absorbing elements 1 and the corresponding connecting elements 2a of the beam. The longitudinal axis of the slotted openings 2b runs so that it is essentially vertical in the working position of the crash beam 2 and it is essentially horizontal in the coupling position of the buffer crash beam 2, and the pins 3 are slidable in the openings 2b. Accordingly, in the working position, the crash beam 2 rests and hangs on pins 3 (fig. 4), while in the coupling position it is slidable essentially horizontally toward the vehicle frame and back (fig. 5-6). In this embodiment, the device allows the crash beam 2 to be retracted further into the vehicle so that even more space is created for manipulation at the coupling S, as best seen in fig. 5 and 6, showing the beam in a position just after pivoting (fig. 5) and after it has been retracted by means of an sliding it on pins 3 (fig. 6).

A person skilled in the art will note that an embodiment with an additionally sliding crash beam 2 may also be equipped or not equipped with a suitable gear 4 and/or means 5 for attaching the drive.

Of course, the invention is not limited to the embodiments described above, and the features indicated in the claims may be combined with each other in any combinations appropriate for a given application of the solution.

## Claims

1. An impact energy absorbing device for a vehicle comprising at least two energy absorbing elements (1) for attachment to the vehicle frame, and a movable crash beam (2) attached to them and having at least two coupling elements (2a), **characterized in that** the crash beam (2) is attached to the energy absorbing elements (1) by means of pins (3) connecting the energy absorbing elements (1) and respective coupling elements (2a) of the beam, and is pivotable between a substantially horizontal operating position and a substantially vertical coupling position.

2. Device according to claim 1, **characterized in that** it is equipped with a gear mechanism (4).

3. Device according to claim 1, **characterized in that** it is equipped with means (5) for attaching a drive.

4. Device according to claim 3, **characterized in that** the means (5) for attaching the drive constitute a worm gear.

5. Device according to claim 1, **characterized in that** the coupling elements (2a) of the crash beam (2) have slotted openings (2b) in which the ends are located of the pins (3) connecting the energy absorbing elements (1) and the corresponding coupling elements (2a) of the beam; wherein the longitudinal axis of the slotted openings (2b) is essentially vertical in the working position of the crash beam (2) and is essentially horizontal in the coupling position of the crash beam (2), and wherein the pins (3) are slidable in the openings (2b) so that in the working position the crash beam (2) rests and hangs on the pins (3), while in the coupling position it is slidable essentially horizontally toward the vehicle frame and back.
